# EUROPÄISCHE PATENTSCHRIFT

(11) **EP 0 584 613 B1**
(45) Veröffentlichungstag und Bekanntmachung des Hinweises auf die Patenterteilung: **16.10.1996**
(21) Anmeldenummer: 93112635.3
(22) Anmeldetag: 06.08.1993
(51) Int. Cl.: C04B 35/00, C08K 3/00, C08L 67/00

(54) **Thermoplastische Formmassen zur Herstellung von anorganischen Sinterformteilen sowie Verfahren zur Herstellung von anorganischen Sinterformteilen**
Thermoplastic moulding matter for manufacture of inorganic sintered bodies as well as process for manufacture of inorganic sintered bodies
Matières à mouler thermoplastiques pour la fabrication des pièces frittées anorganiques ainsi que procédé pour la fabrication des pièces frittées anorganiques

(30) Priorität: 19.08.1992 DE 4227419
(43) Veröffentlichungstag der Anmeldung: 02.03.1994
(73) Patentinhaber: BAYER AG, 51368 Leverkusen (DE)
(72) Erfinder: Ohst, Holger, Dr., D-51519 Odenthal-Steinhaus (DE); Schönfelder, Lothar, Dr., D-96450 Coburg (DE); Roth, Stefan, Dipl.-Ing., D-96274 Itzgrund-Gleussen (DE)

(56) Entgegenhaltungen:
- EP-A- 0 531 819
- DATABASE WPI Week 8622, Derwent Publications Ltd., London, GB; AN 86-141387 & JP-A-61 077 672 (TOYOTA) 21. April 1986

## Beschreibung

Die vorliegende Erfindung betrifft Formmassen zur Herstellung von anorganischen Sinterformkörpern, geeignet für die Spritzgußverarbeitung oder Strangpressen, sowie Verfahren zur Herstellung von anorganischen Sinterformteilen.

Es ist bekannt, Formteile aus anorganischen Materialien dadurch herzustellen, daß man ein Keramikpulver oder ein Metallpuler mit einem thermoplastischen Harz vermischt, die Mischung zu einem Grünkörper verformt, das thermoplastische Harz entfernt und anschließend diesen abgemagerten Grünling zu dem Formkörper versintert. Als thermoplastisches Harz bzw. Bindemittel werden z.B. Polystyrol, Polypropylen, Polyethylen, Polyethylen-co-vinylacetat oder Polymethylmethacrylat eingesetzt, meist in Kombination mit Hilfsstoffen wie z.B. Stearinsäure oder Dioctylphthalat, zur Verbesserung der Gleiteigenschaften der keramischen Masse zugesetzt. Einen guten Überblick über den Stand der Technik geben Übersichtsartikel von M.J. Edirisinghe und J.R.G. Evans, Int. J. High Technology Ceramics 2, 1 - 31 und 249 - 278 (1986) sowie W. Michaeli, R. Bielzer, Ingenieur-Werkstoffe 2, 48 - 52 (1990).

Diese Bindemittel werden aus dem Grünling durch Erhitzen auf Temperaturen von 300-550°C entfernt. Dabei werden die Bindemittel thermisch gespalten. Es muß sehr vorsichtig und langsam auf diese Temperaturen erhitzt werden, damit der Grünling nicht durch unkontrollierten Zerfall der organischen Substanzen und damit verbundener Rißbildung geschädigt wird. Aus diesem Grunde soll die Aufheizzeit nur 4 K/Stunde betragen. In der US-A 4 671 912 werden sogar niedrigere Aufheiztemperaturen von 1 bis 2 K/Stunde, zumindest solange, bis die Hälfte des Bindemittels entfernt ist, empfohlen. Diese langen Aufheizperioden von mehreren Tagen vermindern die Wirtschaftlichkeit dieser Verfahren stark.

Ein Weg, um die Entfernung des Bindemittels zu beschleunigen, besteht nach der DE-A 39 26 869 darin, Polyoxymethylen unter Säurekatalyse im Gasstrom abzubauen. Nachteilig hierbei ist die korrosive Säuratmosphäre bei Temperaturen bis zu 150°C, die besonders apparative Maßnahmen erfordern, und das Auftreten großer Mengen Formaldehyd als Abbauprodukt.

Ein anderer Weg besteht darin, in das Bindemittel sublimationsfähige Substanzen einzuarbeiten, die beim späteren Ausheizprozeß zuerst verdampfen und als sogenannte Porenbildner wirken. So ist beschrieben in JP-A 101 103 eine Mischung aus Polypropylen, Poly(ethylen-co-vinylacetat), Paraffin und Anthracen als sublimationsfähige Komponente. Ein ähnliches Bindemittelsystem ist in JP-A 101 102 beschrieben, bei dem als sublimationsfähige Komponente Terephthalsäuredimethylester eingesetzt wurde. Ein Nachteil dieser Systeme besteht jedoch darin, daß die einmal durch den Spritzguß gegebene Form nur erhalten bleibt, wenn man die Erweichungstemperatur dieses Bindemittels nicht überschreitet. Diese Temperatur ist jedoch für Polypropylen zu gering, als daß in vernünftiger Zeit große Mengen der sublimationsfähigen Komponente entweichen können.

Um das Entweichen von Porenbildnern zu beschleunigen, sind daher höhere Ausheiztemperaturen notwendig. Um auch hierbei noch die Formteile des Grünlings zu gewährleisten, wird in der EP-A 0 329 475 vorgeschlagen, solche Plastifiziermassen einzusetzen, deren eine Komponente wenigstens eine Wärmeformbeständigkeit von 130°C oder höher aufweist. Allerdings wirkt die hohe Wärmeformbeständigkeit einer schnellen Entbinderung entgegen aufgrund des behinderten Diffusionsvermögen des Porenbildners.

Aus der älteren europäischen Patentanmeldung EP-A-0 531 819 für die Vertragsstaaten DE, FR und GB sind Formmassen zur Herstellung von anorganischen Sinterformteilen sowie Verfahren zu deren Herstellung bekannt, wobei Polyester im Bindersystem enthalten sind.

Der vorliegenden Erfindung liegt daher die Aufgabe zugrunde, Formmassen und Verfahren zur Herstellung anorganischer Sinterformteile durch Verformen eines Gemisches aus einem sinterbaren anorganischen Pulver und einem thermoplastischen Bindemittel durch Spritzgießen zu einem Grünkörper, Entfernen des Bindemittels und

Sintern bereitzustellen, die die oben genannten Nachteile nicht aufweisen.

Es wurde nun gefunden, daß diese Aufgabe überraschenderweise gelöst werden kann durch Formmassen, die Bindemittel enthalten, die vorwiegend aus thermoplastisch verarbeitbaren elastomeren Polyestern und weiteren niedermolekularen organischen Verbidungen bestehen.

Gegenstand der Erfindung sind daher keramischen Formmassen, geeignet für die Spritzgußverarbeitung oder Strangpressen, die
a) ein anorganisches Pulver und
b) ein Bindersystem bestehend aus wenigstens 20 bis 80 Gew.-% eines thermoplastisch verarbeitbaren teilkristallinen elastomeren Polyesters mit einer Schmelztemperatur > 130°C, bevorzugt 180 bis 230°C,
c) im Bindersystem wenigstens 20 Gew.-% niedermolekulare Verbindungen enthalten.

Bevorzugt beträgt der Anteil des Bindersystems unter 50 Gew.-%, bevorzugt 4 bis 35 Gew.-%, der Gesamtmasse. Das Bindersystem hat dabei die Aufgabe, die Struktur des geformten Teils vor dem Sintern zu erhalten.

Bevorzugt ist das anorganische Pulver ein keramisches oder metallisches Pulver, wobei sein Anteil wenigstens 50 Gew.-%, bevorzugt über 65 Gew.-%, der Gesamtmasse beträgt.

Bevorzugt ist die polymere Hauptkomponente des Bindersystems ein thermoplastisch verarbeitbarer teilkristalliner elastomerer Polyester.

Allgemein geeignet sind dabei beispielsweise Copolyester (segmentierte Polyesterelastomere) die aus einer Vielzahl wiederkehrender, kurzkettiger Estereinheiten und langkettiger Estereinheiten, die durch Esterbindungen vereinigt sind, aufgebaut sind, wobei die kurzkettigen Estereinheiten 15 bis 65 Gew.-% des Copolyesters ausmachen und die Formel I haben.

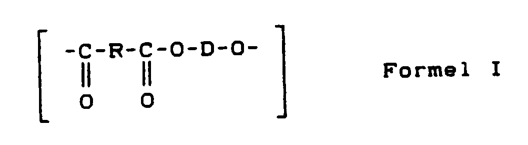

Die langkettigen Estereinheiten machen 35 bis 85 Gew.-% des Copolyesters aus und haben die Formel II 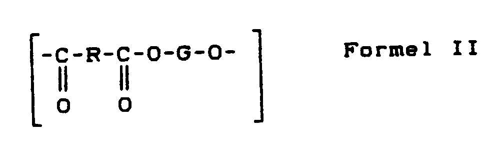 In den Formel I und II steht
R für einen zweiwertigen Rest einer Dicarbonsäure, der ein Molekulargewicht < 350 g/mol hat,
D für einen zweitwertigen Rest eines organischen Diols, der ein Molekulargewicht < 250 g/mol hat,
G für einen zweitwertigen Rest eines langkettigen Glycols der ein durchschnittliches Molekulargewicht von etwa 350 bis 6000 g/mol hat.

Die erfindungsgemäß besonders geeigneten Copolyester sind herstellbar, indem man miteinander a) eine oder mehrere Dicarbonsäuren, b) ein oder mehrere lineare, langkettige Glykole und c) ein oder mehrere niedermolekulare Diole polymerisiert.

Die Dicarbonsäuren für die Herstellung des Copolyesters können aromatische, aliphatisch oder cycloaliphatisch sein, Die bevorzugten Dicarbonsäuren sind die aromatischen Säuren mit 8-16 C-Atomen, insbesondere Phenylendicarbonsäuren, wie Phthal-, Terephthal- und Isophthalsäure sowie Naphthalin-2,6-dicarbonsäure.

Die niedermolekularen Diole für die Umsetzung zur Bildung der kurzkettigen Estereinheiten der Copolyester gehören der Klassen der acyclischen, alicyclischen und aromatischen Dihydroxyverbindungen an, Die bevorzugten Diole haben 2-15 C-Atome, wie Ethylen-, Propylen-, Tetramethylen-, Isobutylen-, Pentamethylen-, 2,2-Dimethyltrimethylen-, Hexamethylen- und Decamethylenglykole, Dihydroxycyclohexan, Cyclohexandimethanol, Resorcin, Hydrochinon und dergleichen. Zu den Bisphenolen für den vorliegenden Zweck gehören Bis-(p-hydroxy)-diphenyl, Bis-(p-hydroxyphenyl)-methan, Bis-(p-hydroxyphenyl)-ethan und Bis-(p-hydroxyphenyl)-propan.

Die langkettigen Glycole zur Herstellung der weichen Segmente der Copolyester haben vorzugsweise Molekulargewichte von etwa 600 bis 3000 g/mol. Zu ihnen gehören Poly-(alkylenether)-glycole, bei denen die Alkylengruppen 2-9 Kohlenstoffatome aufweisen.

Auch Glycolester von Poly-(alkylenoxid)-dicarbonsäuren können als langkettiges Glycol Verwendung finden.

Auch Polyesterglycole können als langkettiges Glykol Verwendung finden.

Zu den langkettigen Glycolen gehören auch Polyformale, die durch Umsetzung von Formaldehyd mit Glycolen erhalten werden, Auch Polythioetherglycole sind geeignet. Polybutadien- und Polyisoprenglycole, Mischpolymere derselben und gesättigte Hydrierungsprodukte dieser Materialien stellen zufriedenstellende langkettige polymere Glycole dar.

Verfahren zur Synthese derartiger Copolyester sind aus DOS 2 239 271, DOS 2 213 128, DOS 2 449 343 und US-P 3 023 192 bekannt.

Geeignete Copolyester im Sinne der Erfindung sind z.B. unter den Handelsnamen Hytrel der Fa. Du Pont, Pelpren der Fa, Toyobo, Arnitel der Fa. Akzo, Ectel der Fa. Eastman Kodak und Riteflex der Fa. Hoechst erhältlich (s. auch Thermoplastic Elastomere; ed, by N.R. Legge, G.Holden, H.E.Schroeder, Kapitel 8, S. 163-196; Hauser-Pulbishers, München 1987).

Eine besonders bevorzugte Ausführungsform der erfindungsgemäßen Formmassen ist somit dadurch gekennzeichnet, daß die thermoplastisch verarbeitbaren teilkristallinen elastomeren Polyester aus Bausteinen des Poly(ethylenterephthalat) oder Poly(butylenterephthalat) oder Poly(ethylennaphthalat) oder Poly(cyclohexan-1,4-dimethylenterephthalat) und Poly(tetramethylenoxid) aufgebaut sind.

Diese an sich bekannten Polyester-Typen zeichnen sich dadurch aus, daß diese blockartig aufgebauten teilkristallinen thermoplastisch verarbeitbaren, elastomeren Polyester sich aufgrund ihrer hohen Schmelztemperatur (>130°C) eine hohe Wärmeformbeständigkeit aufweisen, so daß auch weitere teilkristalline, hier nicht explizit genannten Polyester, im erfindungsgemäßen Sinne eingesetzt werden können.

Gemäß der vorliegenden Erfindung haben elastomere Polyester als Bindemittel für keramische oder metallische Formmassen mehrere Vorteile. So unterliegen elastomere Polyester definierten thermischen Zersetzungsreaktionen, bei denen als Spaltprodukte cyclische Ether, Olefine und aromatische Carbonsäuren gebildet werden. Diese definierte Zersetzungsreaktion führt zu kontrollierbaren Abbauprodukten mit einer einförmigen Freisetzung gasförmiger Komponenten, sodaß elastomere Polyester-Bindemittel ohne Störungen in der Struktur des Formkörpers entfernt werden können Bei einer unkontrollierten Zersetzung, wie sie mit anderen Bindemitteln gewöhnlich erfolgt, ist die Gefahr von Defektstrukturen und Schwachstellen wesentlich größer.

Ein weiterer Vorteil von elastomeren Polyestern als Bindemittel bei der vorliegenden Erfindung besteht darin, daß Wasser, das in der Regel adsorptiv auf der großen Oberfläche der verwendeten keramischen Pulver gebunden im Formteil vorliegt, aufgrund des gegenüber den vielfach verwendeten Polyolefinen deutlich höheren Wasseraufnahmevermögens der elastomeren Polyester in dem das keramische Pulver umgebende Bindemittel gelöst werden kann.

Diese Tatsache verhindert beim Ausheizprozeß den bei Verwendung üblicher Bindemittel ansonsten auftretenden kritischen Punkt bei 100°C, wo oft das verdampfende Wasser Defektstrukturen im Formteil erzeugt.

Als für einen fehlerfreien Ausheizprozeß wesentlich ist das Vorhandensein von wenigstens 20 Gew.-% niedermolekularer, verdampfbarer organischer Komponenten.

Bevorzugte erfindungsgemäße Formmassen sind dadurch gekennzeichnet, daß im Bindersystem wenigstens 20 Gew.-% bis 80 Gew.-% niedermolekulare Verbindungen (Molekulargewicht < 500 g/mol) enthalten sind.

Überraschenderweise wird hierbei gefunden, daß trotz des elastomeren Charakters des Polyesters und hoher Weichmachergehalte demnach eine Wärmeformbeständigkeit des Grünkörpers erhalten werden kann, die ein unproblematisches Ausheizen erlaubt.

Erfindungsgemäß geeignete niedermolekulare Verbindungen können Netzmittel (Trialkoxysilane, Polyalkoxysilane, Fettsäuren wie Palmitin- oder Stearinsäure, Polyethylenoxide u.a.), Plastifizierhilfsmittel (Wachse wie Fettsäureester oder Fettsäureamide, oligomere Polyethylene, Paraffine, Weichmacher wie Dialkyladipat, Dibutylphthalat, Butylbenzylphthalat, N-Butylphenylsulfonamid u.a.) oder andere Hilfsmittel, die die rheologischen Eigenschaften und das Entformungsverhalten (Pentaerythrittetrastearat u.a. Fettsäureester, Silikonöle) der Mischungen bei der Verarbeitung günstig beeinflussen, enthalten und sind dem Fachmann in großer Breite bekannt.

Naturgemäß bevorzugte niedermolekulare Verbindungen sind hierbei niedermolekulare Ester, die über eine gute Verträglichkeit zur Polyestermatrix verfügen. Beispielhaft seien hier genannt Di-(2-ethylhexyl)-phthalat, Phthalsäuredialkylester, Adipinsäuredialkylester, Fettsäureester wie Palmitinsäurestearat, Stearinsäuremyristat oder Montansäureester, Glyoxalsäurediethylester sowie monomere oder oligomere Carbonate wie Bis(pentadecylphenyl)carbonat, Bis(nonylphenyl)-carbonat, oligomeres Ethylencarbonat oder oligomeres Propylcarbonat oder oligomeres Hexandiolcarbonat.

Als besonders bevorzugt eignen sich Phthalsäureester und/oder Adipinsäureester als niedermolekulare Verbindungen für die erfindungsgemäßen keramischen Formmassen.

Besonders bevorzugt enthalten die niedermolekularen Verbindungen wenigstens drei zur Reaktion mit dem teilkristallinen elastomeren Polyester befähigte Gruppen.

Weiterhin sind Ester, Alkohole oder Carbonsäuren als niedermolekulare Verbindungen geeignet, die aufgrund ihrer hohen Funktionalität (wenigstens drei Alkohol- bzw. Carbonsäurefunktionen) durch Umesterung mit den teilkristrallinen Polyestern durch Umesterungsreaktionen eine Vernetzung der Polyester bewirken können und so während des Ausheizprozesses die Wärmeformbeständigkeit des Formkörpers auch über den Schmelzpunkt des teilkristallinen Polyesters hinaus erhalten.

Beispiele für zur Vernetzung durch Umesterung geeignete niedermolekulare Verbindungen sind: Ester auf Basis von Glycerin, Trimethylolpropan, Pentaerythrit, Furanose, Glucose sowie Cellulose oder Stärke oder Polyvinylalkohol wie Glycerintristearat, Trimethylolpropantristearat,

Pentaerythrittristearat, Pentaerythrittetrastearat, Pentaerythrittetrapalmitat, Cellulosetriacetat, Celluloseacetobutyrat, Cellulosepropionat.

Weiterhin können auch andere niedermolekulare Verbindungen als Vernetzer eingesetzt werden, wie Hexamethoxymethylenmelamin oder Hexabutoxymelamin.

Auch sind Vernetzer auf Basis von Molekülen mit wenigstens drei Carbonsäuregruppen einsetzbar, um aus diesen in freier Form oder als Ester durch Umesterung eine Vernetzung des teilkristallinen Thermoplasten zu bewirken, z.B. Zitronensäure, Homo- oder Copolymere der Acrylsäure bzw. Methacrylsäure oder ihrer Ester wie Methylmethacrylat oder Butylacrylat oder auch Copolymere mit Maleinsäureanhydrid als Baustein.

Neben den beiden für die erfindungsgemäße Zusammensetzung des Bindersystems wesentlichen Komponenten von wenigstens 20 Gew.-% eines thermoplastisch verarbeitbaren teilkristallinen elastomeren Polyesters und wenigstens 20 Gew.-% niedermolekularer verdampfbarer organischer Komponenten können im Bindersystem neben den bereits beschriebenen weiteren Additiven auch herkömmliche Thermoplasten in Mengen bis maximal 60 Gew.-% enthalten sein. Beispiele solcher Thermoplasten sind Polyacrylate, Ethylcellulose, ABS, Hydroxypropylcellulose, Polyethylen hoher und niedriger Dichte, Celluloseacetat, Polyamide, Polyester, z.B. Polyethylenterephthalt, Polybutylenterephthalat, Ethylen-acrylsäure-Copolymerisate, Celluloseacetatbutylrat, Polystyrol, Polypropylen, Polybutylen, Polyoximethylen und Polyethylenoxid.

Die vorliegende Erfindung betrifft keramische oder metallische Formmassen, die für eine Spritzgußverarbeitung geeignet sind. Das keramische oder metallische Pulver in der Formmasse wird dabei ausgewählt im Hinblick auf die im gesinterten Formteil angestrebte Funktion, wie sie dem Fachmann bekannt ist.

Dabei handelt es sich, bevorzugt bei den anorganischen Pulvern um solche aus der Gruppe der Nichtoxide Si, Si₃N₄, AlN, BN, SiC, B₄C, der Übergangsmetallcarbide, -nitride, -silicide, -boride, aus der Gruppe der Oxide Al₂O₃, ZrO₂, SiO₂, Y₂O₃, La₂O₃, Seltenerdoxide, Cr₂O₃, TiO₂, Titanate, Ferrite, aus der Gruppe der Elemente B, C, Al, Si um beliebige Mischungen dieser Verbindungen oder um Mischphasen aus diesen Verbindungen oder um metallische Pulver.

Typische keramische Pulver sind z.B. Silicium (Si), Siliciumnitrid (Si₃N₄), Aluminiumoxid (Al₂O₃), Zirkondioxid (bevorzugt Calciumoxid-stabilisiertes ZrO₂), Ferrit, Siliciumcarbid (SiC) und Mischungen davon.

Besonders bevorzugt ist das anorganische Pulver Silicium und/oder Siliciumnitrid.

Um einen gesinterten keramischen Formkörper mit exzellenten Eigenschaften zu erhalten, sollte das keramische Pulver so ausgewählt oder behandelt sein, daß eine möglichst dichte Packung der Pulverpartikel erhalten wird. Im speziellen sind die hier wichtigen Faktoren für eine gute Packung die Teilchengrößenverteilung und der Grad der Agglomeration [M.J.Edirisinghe, J.R.G. Evans; Int. J. High Technology Ceramics 2, 1-31 und 249-278 (1986)].

Typische metallische Pulver sind Eisen- und Stahlpulver, Aluminiumpulver sowie Pulver von Hartmetallen wie z.B. Tantal, Molybdän, Wolfram u.a. Typische Korngrößen liegen hierbei im Bereich von 1-50 µm.

Die erfindungsgemäßen Formmassen können durch Mischen der Komponenten erhalten werden.

Hierzu kann das anorganische Pulver mit den Komponenten des Bindersystems bei Raumtemperatur vorgemischt werden. Die endgültige Herstellung der Formmasse erfolgt durch Anwendung von Scherkräften in einem Kneter und/oder Extruder bei Temperaturen von 100 bis 260°C, je nach Zusammensetzung der Formmasse. Anschließend kann die Formmasse abkühlen gelassen und granuliert werden.

Für die Verformung durch Spritzguß können die üblichen Schnecken- oder Kolbenspritzgußmaschinen eingesetzt werden und die Formmassen bei Temperaturen von 100 bis 260°C und Drucken von 400 - 1800 bar in eine Form, die auf 40 bis 140°C gehalten wird, verformt werden. Nachdruck wird auf die Formmasse solange ausgeübt, bis diese durch Abkühlen erstarrt ist. Dies dauert typischerweise 2 bis 60 Sekunden.

Die vorliegende Erfindung betrifft weiterhin ein Verfahren zur Herstellung der keramischen Formkörper.

Dieses ist dadurch gekennzeichnet, daß
a) eine erfindungsgemäße Formmasse durch Mischen der Komponenten hergetellt wird,
b) eine Formgebung durch Spritzgußverarbeitung erfolgt,
c) ein Ausheizen des Bindersystems aus der spritzgegossenen Form erfolgt,
d) die Formmasse gesintert wird.

Die entformten Grünlinge (oder Grünkörper) werden dann erfindungsgemäß aufgeheizt, um das Bindesystem, d.h. den polymeren Binder und alle mehr oder weniger flüchtigen Additive, schrittweise zu entfernen. Dieser Ausheizprozeß kann unter Luft oder Schutzgasatmosphäre und/oder vermindertem Druck (1060 bis 0,1 mbar) durchgeführt werden. Obwohl Aufheizgeschwindigkeit und Endtemperatur von der Menge und Art der einzelnen Komponenten des Bindersystems und der Charakteristik (i.w. Geometrie) des Formkörpers abhängig sind, können als typische Aufheizraten 5 - 150 K pro Stunde genannt werden. Als vorteilhaft können sich hierbei zusätzliche Haltestufen bei 130°C bis 150°C, 180 bis 200 sowie 240 bis 260°C für einen Zeitraum von jeweils 2 bis 24 Stunden erwiesen.

Die Endtemperaturen des Ausheizvorgangs sollte wenigstens 350°C, bevorzugt jedoch 400 bis 450°C betragen.

Im Anschluß hieran kann die Temperatur weiter erhöht werden, auf das zum Sintern des keramischen Pulvers benötigte Temperaturniveau. Die Höhe der Endtemperatur schwankt selbstverständlich je nach Art des verwendeten anorganischen Pulvers und der Gestalt des Formteils. Allgemein kann die Temperaturerhöhung nach Ausbrennen des Bindersystems mit einer Geschwindigkeit von 50 bis 1000 K pro Stunde erfolgen, bis die gewünschte Endtemperatur in einem Bereich von 1000 bis 2000°C erreicht worden ist.

Für ein vollständiges Sintern des keramischen Pulvers wird der Formkörper bei der erreichten Endtemperatur für 15 Minuten bis 24 Stunden gehalten. Allgemein wird das Sintern durchgeführt in einer Atmosphäre aus Luft, Sauerstoff, Stickstoff oder einem inerten Gas.

Die vorliegende Erfindung liefert viele Vorteile, unter denen besonders zu nennen sind:

Es wird eine verbesserte Formmasse zur Verfügung gestellt durch Verwendung von in der Schmelze leicht fließenden und gut dispergierenden elastomeren Polyestern, so daß auch bei hohem Gehalt an keramischem oder metallischem Pulver eine noch gut thermoplastisch verarbeitbare Formmasse vorliegt.

Weiterhin bilden thermoplastisch verarbeitbare teilkristalline elastomere Polyester in Kombination mit weiteren niedermolekularen organischen Verbindungen als Bindersystem gut verträgliche Mischungen, die zu guter Verarbeitbarkeit und gutem Ausheizverhalten führen.

Darüberhinaus haben die teilkristallinen, thermoplastisch verarbeitbaren elastomeren Polyester eine hohe Schmelztemperatur, wodurch der Ausheizprozeß bei höheren Temperaturen und damit schneller und effizienter ausgeführt werden kann als bei den üblicherweise verwendeten Plastifiziersystemen. Dabei bewirken die elastomeren Eigenschaften der Plastifiziermasse ein gutes Diffusions- und Ausdampfverhältnis der Porenbildner.

Überraschenderweise bleibt dabei während des Ausheizprozesses die Formstabilität erhalten, obwohl allgemein bekannt ist, daß die Wärmeformbeständigkeit von teilkristallinen elastomeren Polymeren geringer ist als die herkömmlicher Thermoplaste. Dieser Befund überrascht umso mehr, als der Zusatz von niedermolekularen Additiven die Wärmeformbeständigkeit noch weiter herabsetzt.

Die vorliegende Erfindung liefert ein verbessertes Verfahren, bei dem keramisches oder metallisches Pulver und Bindesystem effektiv gemischt werden, diese Mischungen gut verarbeitbar sind und daraus hergestellte Formkörper in deutlich kürzeren Ausheizzeiten verarbeitet und gesintert werden können.

Die erfindungsgemäßen Formmassen sowie das Verfahren, daraus durch Spritzgießen und thermische Nachbehandlung Formkörper herzustellen, haben den Vorteil, leicht fließfähiger und gut somit thermoplastisch verarbeitbarer Formmassen in Kombination mit deutlich kürzeren Ausheizzeiten des Bindersystems unter Erhalt fehlerfreier Formteile.

Die folgenden Beispiele sollen die Erfindung illustrieren; dabei bleibt jedoch die Erfindung keinesfalls auf die genannten konkreten Details beschränkt.

### Beispiel 1

324 g Poly(butandiolterephthalat-co-poly(tetramethylenoxid) mit einer Shore-D-Härte von 63 (Hytrel 6356), 102 g Dibutylphthalat, 102 g Dioctyladipat, 11 g Pentaerythrittetrastearat werden mit 1460 g eines Si-Pulvers mit einer mittleren Korngröße von 2 µm abgemischt und in einem Laborkneter zu einem pulverförmigen Granulat verarbeitet. Dieses Granulat wurde auf einer Spritzgußmaschine bei 240°C Massentemperatur zu Rundscheiben (60 mm Durchmesser, 4 mm dick) verarbeitet.

Die Rundscheiben wurden mit einer konstanten Aufheizgeschwindigkeit von 80 K/h auf 200°C erwärmt, dann mit einer Aufheizrate von 40 K/h auf 250°C und zuletzt wieder mit 80 K/h auf die Endtemperatur von 450°C erhitzt. Der Gewichtsverlust nach Tempern bei der Endtemperatur von 450°C für 1 Stunde betrug mehr als 26,5 Gew.-% entsprechend einer nahezu vollständigen Entfernung des Bindesystems.

Die so ausgeheizten Grünlinge zeigten weder Blasen noch Risse noch andere optisch erkennbare Fehlstellen. Aus diesen fehlerfreien Prüfkörpern wurden in einem anschließenden Sinter- und Nitridierungsschritt ebenfalls fehlerfreie Si₃N₄-Formkörper als keramische Fertigteile erhalten.

### Beispiel 2

324 g eines Poly(butandiolterephthalat-co-poly(tetramethylenoxid)) mit einer Shore-D-Härte von 40 (Hytrel 4056) wurden anstelle des in Beispiel 1 verwendeten Polyesters eingesetzt. Nach ansonsten analoger Behandlung resultierte ebenfalls ein fehlerfreies keramisches Fertigteil.

### Beispiel 3

378 g Poly(butandiolterephthalat-co-poly(tetramethylenoxid) mit einer Shore-D-Härte von 40 (Hytrel 4056), 75 g Dibutylphthalat, 75 g Dioctyladipat, 11 g Pentaerythrittetrastearat werden mit 1460 g Si-Pulver wie in Beispiel 1 beschrieben verarbeitet. Nach Formgebung, Ausheizen und Sintern wurden fehlerfreie keramische Fertigteile erhielten.

### Beispiel 4

110 g Polybutandiolterephthalat-co-poly(tetramethylenoxid) mit einer Shore-D-Härte von 63 (Hytrel 6356), 64 g Dibutylphthalat, 64 g Dioctyladipat, 4,9 g Pentaerythrit-tetrastearat und 657 g Si-Pulver werden wie in Beispiel 1 zu pulverförmigen Granulat verarbeitet. Die Spritzgußformgebung bei 240°C erfolgte unter Erhalt von Stäbchen der Abmessungen 80x10x4 mm.

Das Ausheizen erfolgte mit einem Temperaturprogramm wie in Beispiel 1 angegeben. Die Stäbchen wurden dabei mit einer Zweipunktauflage in einem Abstand von 70 mm gelagert. Nach dem Ausheizen betrug der Gewichtsverlust der Stäbchen mehr als 26,5 Gew.-%. Die Stäbchen zeigten keine Verformung, keine Risse und keine Blasen. Aus diesen fehlerfreien Prüfkörpern wurden in einem anschließenden Sinter- und Nitridierungsschrift ebenfalls fehlerfreie Si₃N₄-Formkörper als keramische Fertigteile erhalten.

### Vergleichsbeispiel

529 g Poly(butylenterephthalt-co-poly(tetramethylenoxid) mit einer Shore-D-Härte von 40 (Hytrel 4056), 11 g Pentaerythrit-tetrastearat und 1460 g Si-Pulver wurden wie in Beispiel 1 gemischt, zu Rundscheiben verarbeitet und ausgeheizt.

Die ausgeheizten Grünlinge waren verformt und wiesen blasenartige Oberflächenstrukturen auf.

## Patentansprüche (Patentansprüche für folgende(n) Vertragsstaat(en): DE, FR, GB)

1. Formmassen zur Herstellung von anorganischen Sinterformteilen, geeignet für die Spritzgußverarbeitung oder Strangpressen, dadurch gekennzeichnet, daß sie
a) ein anorganisches Pulver und
b) ein Bindersystem bestehend aus wenigstens 20 bis 80 Gew.-% eines thermoplastisch verarbeitbaren teilkristallinen elastomeren Copolymers, das aus einer Vielzahl wiederkehrender, kurzkettiger Estereinheiten und langkettiger Estereinheiten, die durch Esterbindungen vereinigt sind, aufgebaut ist, wobei die kurzkettigen Estereinheiten 15 bis 65 Gew.-% des Copolyesters ausmachen und die Formel I 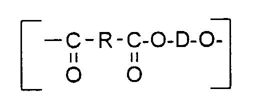 haben und
die langkettigen Estereinheiten 35 bis 85 Gew.-% des Copolyesters ausmachen und die Formel II 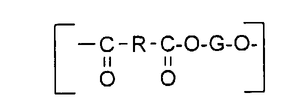 haben, wobei
in den Formeln I und II
R für einen zweiwertigen Rest einer Dicarbonsäure, der ein Molekulargewicht (350 g/mol) hat,
D für einen zweiwertigen Rest eines organischen Diols, der ein Molekulargewicht <250 g/mol hat und
G für einen zweiwertigen Rest eines langkettigen Glykols der ein durchschnittliches Molekulargewicht von etwa 350 bis 6000 g/mol hat, stehen,
mit einer Schmelztemperatur >130°C, bevorzugt 180 bis 230°C,
c) im Bindersystem wenigstens 20 Gew.-% niedermolekulare Verbindungen enthalten.

2. Formmassen gemäß Anspruch 1, dadurch gekennzeichnet, daß der Anteil des Bindersystems unter 50 Gew.-%, bevorzugt 4 bis 35 Gew.-% der Gesamtmasse beträgt.

3. Formmassen gemäß einem der Ansprüche 1 oder 2, dadurch gekennzeichnet, daß das anorganische Pulver ein keramisches oder metallisches Pulver ist und sein Anteil wenigstens 50 Gew.-%, bevorzugt über 65 Gew.-%, der Gesamtmasse beträgt.

4. Formmassen gemäß einem oder mehreren der Ansprüche 1 bis 3, dadurch gekennzeichnet, daß die polymere Hauptkomponente des Bindersystems ein thermoplastisch verarbeitbarer teilkristalliner elastomerer Polyester ist.

5. Formmassen gemäß Anspruch 4, dadurch gekennzeichnet, daß die thermoplastisch verarbeitbaren teilkristallinen elastomeren Polyester aus Bausteinen des Poly(ethylenterephthalat) oder Poly(butylenterephthalat) oder Poly(ethylennaphthenat) oder Poly(cyclohexan-1,4-dimethylenterephthalat) und Poly(tetramethylenoxid) aufgebaut sind.

6. Formmassen gemäß einem oder mehreren der Ansprüche 1 bis 5, dadurch gekennzeichnet, daß im Bindersystem wenigstens 20 Gew.-% bis 80 Gew.-% niedermolekulare Verbindungen (Molekulargewicht <500 g/mol) enthalten sind.

7. Formmassen gemäß Anspruch 6, dadurch gekennzeichnet, daß die niedermolekularen Verbindungen mit Molekulargewicht <500 g/mol Phthalsäureester und/oder Adipinsäureester sind.

8. Formmassen gemäß Anspruch 6, dadurch gekennzeichnet, daß die niedermolekularen Verbindungen wenigstens drei zur Reaktion mit dem teilkristallinen elastomeren Polyester befähigte Gruppen enthalten.

9. Formmassen gemäß einem oder mehreren der Ansprüche 1 bis 8, dadurch gekennzeichnet, daß sie neben den wenigstens 20 Gew.-% thermoplastisch verarbeitbaren teilkristallinen elastomeren Polymeren und wenigstens 20 Gew.-% niedermolekularer Verbindungen bis zu 60 Gew.-% weitere Thermoplaste enthalten.

10. Formmassen gemäß einem oder mehreren der Ansprüche 1 bis 9, dadurch gekennzeichnet, daß es sich bei den anorganischen Pulvern um solche aus der Gruppe der Nichtoxide Si, Si₃N₄, AlN, BN, SiC, B₄C, der Übergangsmetallcarbide, -nitride, -silicide, -boride, aus der Gruppe der Oxide Al₂O₃, ZrO₂, SiO₂, Y₂O₃, La₂O₃, Seltenerdoxide, Cr₂O₃, TiO₂, Titanate, Ferrite, ausder Gruppe der Elemente B, C, Al, Si um beliebige Mischungen dieser Verbindungen oder um Mischphasen aus diesen Verbindungen oder um metallische Pulver handelt.

11. Formmassen gemäß Anspruch 10, dadurch gekennzeichnet, daß das anorganische Pulver Silicium und/oder Siliciumnitrid ist.

12. Verfahren zur Herstellung von anorganischen Sinterformteilen, dadurch gekennzeichnet, daß
a) eine Formmasse zur Herstellung von anorganischen Sinterformteilen gemäß beliebigen Ansprüchen 1 bis 11 hergestellt wird,
b) eine Formgebung durch Spritzgußverarbeitung erfolgt,
c) ein Ausheizen des Bindersystems aus der spritzgegossenen Form erfolgt,
d) die Formmasse gesintert wird.

13. Verfahren gemäß Anspruch 12, dadurch gekennzeichnet, daß das Bindersystem entfernt wird durch Ausheizen mit einem Temperaturanstieg von 5 bis 150 K/Stunde bis auf 450°C.

14. Verfahren gemäß Anspruch 13, dadurch gekennzeichnet, daß im Temperaturbereich von 130 bis 150°C, 180 bis 200°C oder 240 bis 260°C der Temperaturanstieg für jeweils 2 bis zu 24 Stunden unterbrochen wird.

## Patentansprüche (Patentansprüche für folgende(n) Vertragsstaat(en): IT, NL, SE)

1. Formmassen zur Herstellung von anorganischen Sinterformteilen, geeignet für die Spritzgußverarbeitung oder Strangpressen, dadurch gekennzeichnet, daß sie
a) ein anorganisches Pulver und
b) ein Bindersystem bestehend aus wenigstens 20 bis 80 Gew.-% eines thermoplastisch verarbeitbaren teilkristallinen elastomeren Polyesters mit einer Schmelztemperatur > 130°C, bevorzugt 180 bis 230°C,
c) im Bindersystem wenigstens 20 Gew.-% niedermolekulare Verbindungen enthalten.

2. Formmassen gemäß Anspruch 1, dadurch gekennzeichnet, daß der Anteil des Bindersystems unter 50 Gew.-%, bevorzugt 4 bis 35 Gew.-%, der Gesamtmasse beträgt.

3. Formmassen gemäß einem der Ansprüche 1 oder 2, dadurch gekennzeichnet, daß das anorganische Pulver ein keramisches oder metallisches Pulver ist und sein Anteil wenigstens 50 Gew.-%, bevorzugt über 65 Gew.-%, der Gesamtmasse beträgt.

4. Formmassen gemäß einem oder mehreren der Ansprüche 1 bis 3, dadurch gekennzeichnet, daß die polymere Hauptkomponente des Bindersystems ein thermoplastisch verarbeitbarer teilkristalliner elastomerer Polyester ist.

5. Formmassen gemäß Anspruch 4, dadurch gekennzeichnet, daß die thermoplastisch verarbeitbaren teilkristallinen elastomeren Polyester aus Bausteinen des Poly(ethylenterephthalat) oder Poly(butylenterephthalat) oder Poly(ethylennaphthalat) oder Poly(cyclohexan-1,4-dimethylenterephthalat) und Poly(tetramethylenoxid) aufgebaut sind.

6. Formmassen gemäß einem oder mehreren der Ansprüche 1 bis 5, dadurch gekennzeichnet, daß im Bindersystem wenigstens 20 Gew.-% bis 80 Gew.-% niedermolekulare Verbindungen (Molekulargewicht < 500 g/mol) enthalten sind.

7. Formmassen gemäß Anspruch 6, dadurch gekennzeichnet, daß die niedermolekularen Verbindungen mit Molekulargewicht < 500 g/mol Phthalsäureester und/oder Adipinsäureester sind.

8. Formmassen gemäß Anspruch 6, dadurch gekennzeichnet, daß die niedermolekularen Verbindungen wenigstens drei zur Reaktion mit dem teilkristallinen elastomeren Polyester befähigte Gruppen enthalten.

9. Formmassen gemäß einem oder mehreren der Ansprüche 1 bis 8, dadurch gekennzeichnet, daß sie neben den wenigstens 20 Gew.-% thermoplastisch verarbeitbaren teilkristallinen elastomeren Polymeren und wenigstens 20 Gew.-% niedermolekularer Verbindungen bis zu 60 Gew.-% weitere Thermoplaste enthalten.

10. Formmassen gemäß einem oder mehreren der Ansprüche 1 bis 9, dadurch gekennzeichnet, daß es sich bei den anorganischen Pulvern um solche aus der Gruppe der Nichtoxide Si, Si₃N₄, AIN, BN, SiC B₄C, der Übergangsmetallcarbide, -nitride, -silicide, -boride, aus der Gruppe der Oxide Al₂O₃, ZrO₂, SiO₂, Y₂O₃, La₂O₃, Seltenerdoxide, Cr₂O₃, TiO₂, Titanate, Ferrite, aus der Gruppe der Elemente B, C, Al, Si, um beliebige Mischungen dieser Verbindungen oder um Mischphasen aus diesen Verbindungen oder um metallische Pulver handelt.

11. Formmassen gemäß Anspruch 10, dadurch gekennzeichnet, daß das anorganische Pulver Silicium und/oder Siliciumnitrid ist.

12. Verfahren zur Herstellung von anorganischen Sinterformteilen, dadurch gekennzeichnet, daß
a) eine Formmasse zur Herstellung von anorganischen Sinterformteilen gemäß beliebigen Ansprüchen 1 bis 11 hergestellt wird,
b) eine Formgebung durch Spritzgußverarbeitung erfolgt,
c) ein Ausheizen des Bindersystems aus der spritzgegossenen Form erfolgt,
d) die Formmasse gesintert wird.

13. Verfahren gemäß Anspruch 12, dadurch gekennzeichnet, daß das Bindersystem entfernt wird durch Ausheizen mit einem Temperaturanstieg von 5 bis 150 K/Stunde bis auf 450°C.

14. Verfahren gemäß Anspruch 13, dadurch gekennzeichnet, daß im Temperaturbereich von 130°C bis 150°C, 180°C bis 200°C oder 240°C bis 260°C der Temperaturanstieg für jeweils 2 bis zu 24 Stunden unterbrochen wird.

## Claims (Claims for the following Contracting State(s): DE, FR, GB)

1. Moulding compositions, suitable for injection moulding or extrusion, for the production of inorganic sintered mouldings characterised in that they contain
a) an inorganic powder and
b) a binder system consisting of at least 20 to 80 wt.% of a melt processable partially crystalline elastomeric copolymer which is synthesised from a plurality of repeating, short-chain ester units and long-chain ester units, which are joined together by ester bonds, wherein the short-chain ester units constitute 15 to 65 wt.% of the copolyester and are of the formula I 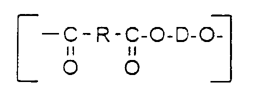 and the long-chain ester units constitute 35 to 85 wt.% of the copolyester and are of the formula II 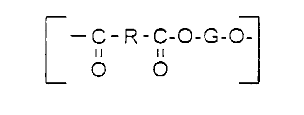 wherein, in the formulae I and II,
R denotes a divalent residue of a dicarboxylic acid, which residue has a molecular weight of (350 g/mol),
D denotes a divalent residue of an organic diol, which residue has a molecular weight of < 250 g/mol and
G denotes a divalent residue of a long-chain glycol having an average molecular weight of approximately 350 to 6000 g/mol,
with a melting temperature of > 130°C, preferably of 180 to 230°C,
c) in the binder system, at least 20 wt.% of low molecular weight compounds.

2. Moulding compositions according to claim 1, characterised in that the binder system constitutes below 50 wt.%, preferably 4 to 35 wt.%, of the total composition.

3. Moulding compositions according to one of claims 1 or 2, characterised in that the inorganic powder is a ceramic or metallic powder constituting at least 50 wt.%, preferably above 65 wt.%, of the total composition.

4. Moulding compositions according to one or more of claims 1 to 3, characterised in that the principal polymeric component of the binder system is a melt processable partially crystalline elastomeric polyester.

5. Moulding compositions according to claim 4, characterised in that the melt processable partially crystalline elastomeric polyester is synthesised from structural units of poly(ethylene terephthalate) or poly(butylene terephthalate) or poly(ethylene naphthenate) or poly(cyclohexane-1,4-dimethylene terephthalate) and poly(tetramethylene oxide).

6. Moulding compositions according to one or more of claims 1 to 5, characterised in that the binder system contains at least 20 wt.% to 80 wt.% of low molecular weight compounds (molecular weight < 500 g/mol).

7. Moulding compositions according to claim 6, characterised in that the low molecular weight compounds having a molecular weight of < 500 g/mol are phthalic acid esters and/or adipic acid esters.

8. Moulding compositions according to claim 6, characterised in that the low molecular weight compounds contain at least three groups capable of reacting with the partially crystalline elastomeric polyester.

9. Moulding compositions according one or more of claims 1 to 8, characterised in that they contain up to 60 wt.% of further thermoplastics in addition to the at least 20 wt.% of melt processable partially crystalline polymers and at least 20 wt.% of low molecular weight compounds.

10. Moulding compositions according to one or more of claims 1 to 9, characterised in the inorganic powders are those from the groups of non-oxides Si, Si₃N₄, AlN, BN, SiC, B₄C, the transition metal carbides, nitrides, silicides, borides, from the group of oxides Al₂O₃, ZrO₂, SiO₂, Y₂O₃, La₂O₃, rare earth oxides, Cr₂O₃, TiO₂, titanates, ferrites, from the group of elements B, C, Al, Si, any desired mixtures of these compounds or mixed phases of these compounds or metallic powders.

11. Moulding compositions according to claim 10, characterised in that the inorganic powder is silicon and/or silicon nitride.

12. Process for the production of inorganic sintered mouldings, characterised in that
a) a moulding composition for the production of inorganic sintered mouldings is produced according to any of claims 1 to 11,
b) shaping is performed by injection moulding,
c) the binder system is removed from the injection moulding by heating,
d) the moulding composition is sintered.

13. Process according to claim 12, characterised in that the binder system is removed by heating to 450°C at a rate of 5 to 150 K/hour.

14. Process according to claim 13, characterised in that the increase in temperature is interrupted in the temperature ranges from 130 to 150°C, 180 to 200°C or 240 to 260°C, in each case for 2 to 24 hours.

## Claims (Claims for the following Contracting State(s): IT, NL, SE)

1. Moulding compositions, suitable for injection moulding or extrusion, for the production of inorganic sintered mouldings characterised in that they contain
a) an inorganic powder and
b) a binder system consisting of at least 20 to 80 wt.% of a melt processable partially crystalline elastomeric polyester having a melting temperature of > 130°C, preferably of 180 to 230°C,
c) in the binder system, at least 20 wt.% of low molecular weight compounds.

2. Moulding compositions according to claim 1, characterised in that the binder system constitutes below 50 wt.%, preferably 4 to 35 wt.%, of the total composition.

3. Moulding compositions according to one of claims 1 or 2, characterised in that the inorganic powder is a ceramic or metallic powder constituting at least 50 wt.%, preferably above 65 wt.%, of the total composition.

4. Moulding compositions according to one or more of claims 1 to 3, characterised in that the principal polymeric component of the binder system is a melt processable partially crystalline elastomeric polyester.

5. Moulding compositions according to claim 4, characterised in that the melt processable partially crystalline elastomeric polyester is synthesised from structural units of poly(ethylene terephthalate) or poly(butylene terephthalate) or poly(ethylene naphthalate) or poly(cyclohexane-1,4-dimethylene terephthalate) and poly(tetramethylene oxide).

6. Moulding compositions according to one or more of claims 1 to 5, characterised in that the binder system contains at least 20 wt.% to 80 wt.% of low molecular weight compounds (molecular weight < 500 g/mol).

7. Moulding compositions according to claim 6, characterised in that the low molecular weight compounds having a molecular weight of < 500 g/mol are phthalic acid esters and/or adipic acid esters.

8. Moulding compositions according to claim 6, characterised in that the low molecular weight compounds contain at least three groups capable of reacting with the partially crystalline elastomeric polyester.

9. Moulding compositions according one or more of claims 1 to 8, characterised in that they contain up to 60 wt.% of further thermoplastics in addition to the at least 20 wt.% of melt processable partially crystalline polymers and at least 20 wt.% of low molecular weight compounds.

10. Moulding compositions according to one or more of claims 1 to 9, characterised in that the inorganic powders are those from the groups of non-oxides Si, Si₃N₄, AlN, BN, SiC, B₄C, the transition metal carbides, nitrides, silicides, borides, from the group of oxides Al₂O₃, ZrO₂, SiO₂, Y₂O₃, La₂O₃, rare earth oxides, Cr₂O₃, TiO₂, titanates, ferrites, from the group of elements B, C, Al, Si, any desired mixtures of these compounds or mixed phases of these compounds or metallic powders.

11. Moulding compositions according to claim 10, characterised in that the inorganic powder is silicon and/or silicon nitride.

12. Process for the production of inorganic sintered mouldings, characterised in that
a) a moulding composition for the production of inorganic sintered mouldings is produced according to any of claims 1 to 11,
b) shaping is performed by injection moulding,
c) the binder system is removed from the injection moulding by heating,
d) the moulding composition is sintered.

13. Process according to claim 12, characterised in that the binder system is removed by heating to 450°C at a rate of 5 to 150 K/hour.

14. Process according to claim 13, characterised in that the increase in temperature is interrupted in the temperature ranges from 130 to 150°C, 180 to 200°C or 240 to 260°C, in each case for 2 to 24 hours.

## Revendications (Revendications pour l'(les) Etat(s) contractant(s) suivant(s): DE, FR, GB)

1. Matières à mouler pour la fabrication de pièces minérales moulées et frittées, convenant pour le travail par moulage par injection ou par extrusion, caractérisées en ce qu'elles contiennent
a) une poudre minérale et
b) une composition de liant consistant en au moins 20 à 80% en poids d'un copolymère élastomère partiellement cristallin apte au travail thermoplastique constitué de multiples motifs répétés esters à chaîne courte et esters à chaîne longue reliés par des liaisons esters, les motifs esters à chaîne courte constituant 15 à 65% du poids du polyester et répondant à la formule I 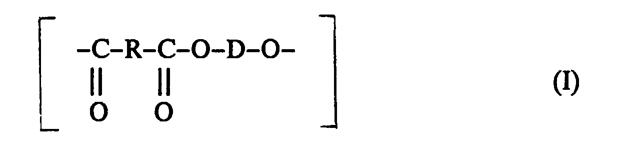 les motifs esters à chaîne longue constituant 35 à 85% du poids du copolyester et répondant à la formule II 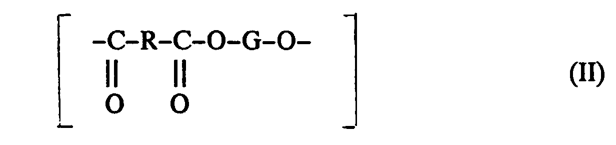 dans lesquelles
R représente le radical divalent d'un acide dicarboxylique de poids moléculaire 350 g/mol,
D représente le radical divalent d'un diol organique de poids moléculaire inférieur à 250 g/mol et
G représente un radical divalent d'un glycol à longue chaîne de poids moléculaire moyen environ 350 à 6000 g/mol,
et qui a une température de fusion supérieure à 130°C, de préférence de 180 à 230°C,
c) dans la composition de liant, au moins 20% en poids de composés à bas poids moléculaire.

2. Matières à mouler selon revendication 1 caractérisées en ce que la proportion de la composition de liant est inférieure à 50% et représente de préférence de 4 à 35% de la masse totale.

3. Matières à mouler selon une des revendications 1 ou 2, caractérisées en ce que la poudre minérale est une poudre céramique ou une poudre métallique dont la proportion est d'au moins 50% et de préférence supérieure à 65% du poids de la masse totale.

4. Matières à mouler selon une ou plusieurs des revendications 1 à 3, caractérisées en ce que le composant polymère principal de la composition de liant est un polyester élastomère partiellement cristallin apte au travail thermoplastique.

5. Matières à mouler selon la revendication 4, caractérisées en ce que les polyesters élastomères partiellement cristallins aptes au travail thermoplastique sont constitués de motifs de polytéréphtalate d'éthylène ou de polytéréphtalate de butylène ou de polynaphténate d'éthylène ou de poly(cyclohexane-1,4-diméthylènetéréphtalate) et de poly(oxyde de tétraméthylène).

6. Matières à mouler selon une ou plusieurs des revendications 1 à 5, caractérisées en ce que la composition de liant contient au moins 20% en poids et jusqu'à 80% en poids de composés à bas poids moléculaire (poids moléculaire inférieur à 500 g/mol).

7. Matières à mouler selon la revendication 6, caractérisées en ce que les composés à bas poids moléculaire, de poids moléculaire inférieur à 500 g/mol, sont des esters phtaliques et/ou adipiques.

8. Matières à mouler selon la revendication 6, caractérisées en ce que les composés à bas poids moléculaire contiennent au moins trois groupes capables de réagir avec les polyesters élastomères partiellement cristallins.

9. Matières à mouler selon une ou plusieurs des revendications 1 à 8, caractérisées en ce que, en plus de 20% en poids au moins de polymères élastomères partiellement cristallins aptes au travail thermoplastique et 20% en poids au moins de composés à bas poids moléculaire, elles contiennent jusqu'à 60% en poids d'autres matières thermoplastiques.

10. Matières à mouler selon une ou plusieurs des revendications 1 à 9, caractérisées en ce que les poudres minérales sont choisies dans le groupe des non-oxydes Si, Si₃N₄, AlN, BN, SiC, B₄C, des carbures, nitrures, siliciures, borures des métaux de transition, dans le groupe des oxydes A₂O₃, ZrO₂, SiO₂, Y₂O₃, L₂O₃, les oxydes des terres rares, de Cr₂O₃, TiO₂, des titanates, des ferrites dont les éléments sont choisis parmi B, C, Al, Si, ou bien consistent en mélanges quelconques de ces composés ou en phases mélangées de ces composés, ou bien consistent en poudres métalliques.

11. Matières à mouler selon revendication 10, caractérisées en ce que la poudre minérale consiste en silicium et/ou nitrure de silicium.

12. Procédé pour la fabrication de pièces minérales moulées et frittées, caractérisé en ce que
a) on prépare une matière à mouler conçue pour la fabrication de pièces minérales moulées et frittées selon l'une quelconque des revendications 1 à 11,
b) on moule la matière à mouler par injection,
c) on provoque l'élimination de la composition de liant de la pièce moulée par chauffage,
d) on fritte la matière à mouler.

13. Procédé selon la revendicationn 12, caractérisé en ce que la composition de liant est éliminée par un chauffage réalisé avec une augmentation de température de 5 à 150 K/h jusqu'à 450°C.

14. Procédé selon revendication 13, caractérisé en ce que, dans les intervalles de température de 130 à 150°C, de 180 à 200°C ou de 240 à 260°C, on interrompt l'augmentation de température pendant une durée de 2 à 24 h à chaque fois.

## Revendications (Revendications pour l'(les) Etat(s) contractant(s) suivant(s): IT, NL, SE)

1. Matières à mouler pour la fabrication de pièces minérales moulées et frittées, convenant pour le moulage par injection ou par l'extrusion, caractérisées en ce qu'elles contiennent
a) une poudre minérale et
b) une composition de liant consistant en au moins 20 à 80% en poids d'un polyester élastomère partiellement cristallin apte au travail thermoplastique et ayant une température de fusion supérieure à 130°C, de préférence de 180 à 230°C,
c) au moins 20% en poids de composés à bas poids moléculaire dans la composition de liant.

2. Matières à mouler selon revendication 1, caractérisées en ce que la proportion de la composition de liant représente moins de 50% en poids et de préférence de 4 à 35% du poids total.

3. Matières à mouler selon une des revendications 1 ou 2, caractérisées en ce que la poudre minérale est une poudre céramique ou une poudre métallique dont la proportion représente au moins 50% et de préférence plus de 65% du poids total.

4. Matières à mouler selon une ou plusieurs des revendications 1 à 3, caractérisées en ce que le composant polymère principal de la composition de liant est un polyester élastomère partiellement cristallin apte au travail thermoplastique.

5. Matières à mouler selon la revendication 4, caractérisées en ce que les polyesters élastomères partiellement cristallins aptes au travail thermoplastique sont constitués de motifs de polytéréphtalate d'éthylène ou de polytéréphtalate de butylène ou de polynaphtalate d'éthylène ou de poly(cyclohexane-1,4-diméthylènetéréphtalate) et de poly(oxyde de tétraméthylène).

6. Matières à mouler selon une ou plusieurs des revendications 1 à 5, caractérisées en ce que la composition de liant contient au moins 20% en poids et jusqu'à 80% en poids de composés à bas poids moléculaire (poids moléculaire inférieur à 500 g/mol).

7. Matières à mouler selon revendication 6, caractérisées en ce que les composés à bas poids moléculaire, de poids moléculaire inférieur à 500 g/mol, sont des esters phtaliques et/ou adipiques.

8. Matières à mouler selon la revendication 6, caractérisées en ce que les composés à bas poids moléculaire contiennent au moins trois groupes capables de réagir avec le polyester élastomère partiellement cristallin.

9. Matières à mouler selon une ou plusieurs des revendications 1 à 8, caractérisées en ce que, en plus des 20% en poids au moins de polymères élastomères partiellement cristallins aptes au travail thermoplastique et des 20% en poids au moins de composés à bas poids moléculaire, elles contiennent jusqu'à 60% en poids d'autres matières thermoplastiques.

10. Matières à mouler selon une ou plusieurs des revendications 1 à 9, caractérisées en ce que les poudres minérales sont prises dans le groupe des non-oxydes Si, Si₃N₄, AlN, BN, SiC, B₄C, des carbures, nitrures, siliciures, borures des métaux de transition, dans le groupe des oxydes A₂O₃, ZrO₂, SiO₂, Y₂O₃, L₂O₃, les oxydes des terres rares, Cr₂O₃, TiO₂, des titanates, des ferrites dont les éléments sont B, C, Al, Si, des mélanges quelconques de ces composés ou des phases mélangées de ces composés ou bien elles consistent en poudres métalliques.

11. Matières à mouler selon la revendication 10, caractérisées en ce que la poudre minérale consiste en silicium et/ou nitrure de silicium.

12. Procédé pour la fabrication de pièces minérales moulées et frittées, caractérisé en ce que
a) on prépare une matière à mouler conçue pour la fabrication de pièces minérales moulées et frittées selon l'une quelconque des revendications 1 à 11,
b) on moule la matière par injection,
c)on élimine la composition de liant de la pièce moulée par injection par chauffage,
d) on fritte la matière à mouler.

13. Procédé selon la revendication 12, caractérisé en ce que la composition de liant est éliminée par un chauffage avec augmentation de température de 5 à 150 K/h jusqu'à 450°C.

14. Procédé selon revendication 13, caractérisé en ce que dans les intervalles de température de 130 à 150°C, de 180 à 200°C ou de 240 à 260°C, on interrompt l'augmentation de température pendant une durée de 2 à 24 h dans chaque cas.
